# EUROPEAN PATENT SPECIFICATION

(11) **EP 4 469 731 B1**
(45) Date of publication and mention of the grant of the patent: **13.05.2026**
(21) Application number: 23706191.6
(22) Date of filing: 24.01.2023
(51) Int. Cl.: F24H 1/10, F24H 15/136, F24H 15/212, F24H 15/254

(54) **FREEZE PROTECTION VALVES, SYSTEMS, AND METHODS**
GEFRIERSCHUTZVENTILE, SYSTEME UND VERFAHREN
VANNES, SYSTÈMES ET PROCÉDÉS DE PROTECTION CONTRE LE GEL

(30) Priority: 24.01.2022 US 202263302167 P
(43) Date of publication of application: 04.12.2024
(73) Proprietor: Rheem Manufacturing Company, Atlanta, GA 30328 (US)
(72) Inventor: SEMBA, Yoshiki, Atlanta, Georgia 30328 (US); BROWN, Jacob H., Atlanta, Georgia 30328 (US); HAYDEN, Christopher M., Atlanta, Georgia 30328 (US); TOMASCO, Sarah N., Atlanta, Georgia 30328 (US); SATYANARAYANA, Harsha, Atlanta, Georgia 30328 (US); MANAY, Atilhan, Atlanta, Georgia 30328 (US); BINDBEUTEL, Derek, Atlanta, Georgia 30328 (US); PARBHOO, Rajan, Atlanta, Georgia 30328 (US)
(74) Representative: Reddie & Grose LLP
(86) International application number: PCT/US2023/011415
(87) International publication number: WO 2023/141349

(56) References cited:
- CN-A- 113 847 737
- CN-B- 103 954 044
- CN-U- 202 813 794
- CN-U- 204 513 779
- US-A- 4 191 166
- US-A- 4 621 679

## Description

### CROSS-REFERENCE TO RELATED APPLICATIONS

This application claims priority to U.S. Provisional Application No. 63/302,167, filed January 24, 2022.

### FIELD OF TECHNOLOGY

The present invention relates generally to valves and systems for preventing damage caused by water freezing in piping systems and, more particularly, to freeze protection valves and systems for tankless water heaters.

### BACKGROUND

Tankless water heating systems, including gas and electric-based tankless water heaters, are commonly installed in locations where the tankless water heater can be exposed to low ambient temperatures. For example, tankless water heaters are often installed on the outside of a home or building, or inside of a home or building such as in an attic, or in a garage. Although these locations may be convenient installation locations and are good for providing sufficient ventilation for gas-fired tankless water heaters, installing a tankless water heater in a location susceptible to low ambient temperatures can increase the risk that the tankless water heater becomes damaged due to water freezing within the tankless water heater. It is common for a heat exchanger of a tankless water heater to become damaged when water freezes and expands within the heat exchanger, often resulting in an expensive repair or replacement of the heat exchanger.

To help reduce the likelihood that the tankless water heater becomes damaged due to freezing water, some tankless water heaters include resistive heating elements or heat tape configured to heat the water and/or piping of the tankless water heater when a low ambient temperature is detected. Other tankless water heaters include control functions configured to periodically fire the gas burner to heat the water in the tankless water heater and prevent the water from freezing. Such resistive heating systems or gas heating methods are inefficient and tend to increase the overall operational cost of the tankless water heater. Furthermore, these heating methods are rendered inoperable during a power outage because the tankless water heater is unable to control the resistive heating elements or the ignition system of the gas burner. Therefore, if a power outage occurs in low ambient temperatures (e.g., during an ice storm or a snowstorm), the tankless water heater may be unable to operate and can be damaged if the water in the tankless water heater freezes.

Some existing freeze protection systems include drains and valves that allow the water to drain from the tankless water heater, thereby preventing the tankless water heater from being damaged by expanding frozen water. Unfortunately, many of these freeze protection systems require manual manipulation of the valves to drain the water. Manually draining the water from the tankless water heater can be a cumbersome task and is often forgotten or overlooked by homeowners. Other freeze protection systems include valves that can automatically actuate when the temperature of the ambient air or the water reaches near-freezing temperatures (e.g., 35 °F). These automatic valves, however, are designed to open even if power is still supplied to the tankless water heater. As will be appreciated, a loss of hot water every time the ambient temperature approaches the freezing temperature of water, even if no power is lost, is not desirable. Furthermore, other freeze protection systems that utilize solenoid valves are designed to automatically open upon a loss of power. Unfortunately, automatically draining the water upon each loss of power, including a brief loss of power or a loss of power when the ambient temperature is greater than the freezing temperature of water, is impractical.

Accordingly, an improved tankless water heater is needed that is capable of providing freeze protection in the event of low ambient temperature conditions and loss of electrical power.

US 4,621,679 discloses a valve for a water temperature control system having a heat exchanger, a tank, and a pump for circulating heat transfer fluid through a supply line from the tank to the heat exchanger and through a return line from the heat exchanger to the tank including a valve housing interposed in both the supply line and the return line having supply inlet and supply outlet connections, having return inlet and return outlet connections, and having first and second drain connections, a valve element associated with the valve housing having a first position for normally circulating the heat transfer fluid from the supply inlet connection to the supply outlet connection and from the return inlet connection to the return outlet connection and having a second position discontinuing circulation through the supply inlet connection and the return outlet connection and connecting the supply outlet connection to the first drain connection and the return outlet connection to the second drain connection. Actuation is provided for moving the valve element to the second position upon the occurrence of a reduction in the ambient temperature proximate the heat exchanger below a predetermined value, a loss of power to the valve, or a malfunction of the valve.

US 4,191,166 discloses a domestic solar water heater system is provided which includes a collector, a storage tank, and a circulating pump. The system also includes a solid state electronic control module which automatically stops the circulating pump when the temperature of the water in the collector drops below the temperature of the water in the storage system, so that water is circulated through the system only when solar heat is available to heat the water to a temperature above the temperature of the water already stored in the storage tank. The system also includes a valve module which, upon a signal from the control module, causes the water to drain out of the collector when the temperature of the water in the collector falls to freezing temperatures so as to prevent damage to the collector. The control module also serves to stop the pump, to close the valve module, and to drain the collector when the temperature of the water in the storage tank reaches a predetermined maximum temperature.

CN 113 847 737 discloses an anti-freezing water heater comprising a water heater body, a water inlet pipe, a drain pipe, an anti-freezing valve, a tap water pipe, a first valve body, a first valve element and a driving part. The water inlet pipe is in fluid communication with the water inlet end of the water heater body. The drain pipe is in fluid communication with the water outlet end of the water heater body. The first valve body is internally provided with a longitudinally-through first water flow channel and a valve chamber crossed with the first water flow channel, the section, located above the valve chamber, of the first water flow channel is a water outlet channel, the section, located below the valve chamber, of the first water flow channel is a water inlet channel, the water outlet channel is in fluid communication with the water inlet pipe, and the water inlet channel is in fluid communication with the tap water pipe. The first valve element is arranged in the valve chamber and can move relative to the valve chamber. The driving part is connected with the first valve element, the driving part can expand when heated to push the first valve element to the position away from the first water flow channel, the driving part can contract when cooled to enable the first valve element to block the water inlet channel and the water outlet channel, and water does not enter the water inlet pipe any more.

CN 103 954 044 discloses a solenoid drain valve arranged in a valve body; the solenoid drain valve comprises a solenoid valve core, and a solenoid coil arranged outside the solenoid valve core; a drain cavity is also arranged in the valve body; the solenoid valve core is arranged in the drain cavity; the lower part of the drain cavity is connected with a drain opening; a solenoid valve core spring pushing the solenoid valve core is arranged in the drain cavity; the drain opening is opened and closed by the lower end of the solenoid valve core; the lower part of the drain cavity is communicated with a water outlet through a connecting pipeline; the side part of the drain cavity is communicated with a valve upper cavity through a pipeline.

CN 204 513 779 discloses gas heater automatic drainage antifreezing measures, including: a heat exchange line, drain line, by-pass line and controller, the heat exchange line includes: an inlet tube, outlet pipe on the heat exchanger are connected to the heat exchanger, the drain line includes: first drain pipe and the second drain pipe of connection on inlet tube, outlet pipe, by-pass line connects between inlet tube and outlet pipe, be equipped with first normal close type stop valve and temperature sensor on heat exchange line, be equipped with second normal close type stop valve and third normal close type stop valve respectively on first drain pipe and second drain pipe, be equipped with normal on stop valve and water flow sensor on by-pass line, be equipped with the check valve on the outlet pipe, said controller and temperature sensor, first, second, third normal close type stop valve, normal on stop valve, water flow sensor signal connection.

CN 202 813 794 discloses a drain antifreeze device of a gas water heater. The gas water heater comprises a controller, a three-way body, a drain electromagnetic valve and at least two water flow passages. The drain electromagnetic valve is arranged on the three-way body, the water flow passages can be switched mutually and are communicated with the three-way body, and the drain electromagnetic valve is electrically connected with the controller. The utility model further provides the gas water heater which comprises the drain antifreeze device.

### SUMMARY

Aspects of the present invention are defined by the independent claims below to which reference should now be made. Optional features are defined by the dependent claims.

Valves and systems for preventing damage that can be caused by water freezing in piping systems and, more particularly, to freeze protection valves and systems for water heaters, such as tankless water heaters, are disclosed herein.

In one aspect, a freeze protection system is provided that includes: a first valve configured to be coupled with an inlet of a water heater; a second valve configured to be coupled with an outlet of the water heater; and a valve actuator configured to automatically actuate the first valve and the second valve to permit water to drain from the water heater when (1) electric power is lost to the water heater, and (2) a temperature of a fluid in or around the water heater is less than or equal to a predetermined low temperature threshold.

In another aspect, a water heater is provided that includes a tank having a water inlet and a water outlet; and a freeze protection system as described above, wherein the first valve is connected to and in fluid communication with the water inlet, and the second valve is connected to and in fluid communication with the water outlet. The water heater may be a tankless water heater.

In yet another aspect, a valve assembly for a water heater is provided, which includes a first fluid pathway configured to permit water to flow from a water source and through the water heater; a second fluid pathway configured to permit the water to drain from the water heater; a plug configured to transition between a first position and a second position, the plug being configured to open the first fluid pathway and close the second fluid pathway when in the first position, and close the first fluid pathway and open the second fluid pathway when in the second position; and a valve actuator configured to automatically actuate the plug from the first position and to the second position when (1) electric power is lost to the water heater, and (2) a temperature of a fluid in or around the water heater is less than or equal to a predetermined low temperature threshold.

In still another aspect, a method of controlling a freeze protection system is provided. The method includes actuating a first valve and a second valve, wherein the first valve is in fluid communication with an inlet of a water heater (e.g., a tankless water heater) and the second valve is in fluid communication with an outlet of the water heater, to permit water to drain from the water heater upon both (1) loss of electric power to the water heater, and (2) a temperature of a fluid in or around the water heater being less than or equal to a predetermined low temperature threshold. For example, the first valve and the second valve may be configured to transition: from an open state to a closed state when (1) the electric power is lost to the water heater and (2) the temperature of the fluid is less than or equal to the temperature threshold, such that in the closed state water is prevented from flowing into the water heater; and from a closed state to an open state when (1) the electric power is restored to the water heater, or (2) the temperature of the fluid is greater than the temperature threshold, such that in the open state water is permitting to flow into the water heater. In particular embodiments, the method includes delaying, via an on-delay timer, re-supply of electric power to the water heater for a predetermined period after restoration of electric power.

### BRIEF DESCRIPTION OF THE DRAWINGS

The detailed description is set forth with reference to the accompanying drawings. The use of the same reference numerals may indicate similar or identical items. Various embodiments may utilize elements and/or components other than those illustrated in the drawings, and some elements and/or components may not be present in various embodiments. Elements and/or components in the figures are not necessarily drawn to scale.
FIG. 1A is a plan view of a tankless water heater having a freeze protection system in a first position, according to one embodiment of the present disclosure.
FIG. 1B is a plan view of the tankless water heater depicted in FIG. 1A, having a freeze protection system in a second position.
FIG. 2 is a block diagram depicting a method of activating and deactivating a freeze protection system, according to one embodiment of the present disclosure.
FIG. 3A is a plan view of a tankless water heater having a freeze protection system in a first position, according to another embodiment of the present disclosure.
FIG. 3B is a plan view of the tankless water heater depicted in FIG. 3A, having a freeze protection system in a second position.
FIG. 4 is a plan view of a tankless water heater having a freeze protection system, according to a further embodiment of the present disclosure.
FIG. 5 is a block diagram depicting a method of activating and deactivating the freeze protection system of FIG. 4.
FIG. 6 is an exemplary circuit for delivering power to an actuating system for a valve of a freeze protection system, according to one embodiment of the present disclosure.
FIG. 7A is a plan view of an actuating system for a valve of a freeze protection system, according to one embodiment of the present disclosure.
FIG. 7B is a plan view of an actuating system for a valve of a freeze protection system, according to an alternative embodiment.
FIG. 8A is a plan view of an actuating system for a valve of a freeze protection system in a first position, according to another embodiment of the present disclosure.
FIG. 8B is a plan view of the actuating system depicted in FIG. 7A, the actuating system being in a second position.
FIG. 9A is a front view of the exterior of a valve for a freeze protection system, in according to one embodiment of the present disclosure.
FIG. 9B is a front view of the interior of the valve depicted in FIG. 8A, the valve being in a first position.
FIG. 9C is a front view of the interior of the valve depicted in FIG. 8A, the valve being in a second position.
FIG. 10A is a front view of a valve for a freeze protection system in a first position, according to another embodiment of the present disclosure.
FIG. 10B is a front view of the valve depicted in FIG. 9B, the valve being in a second position.
FIG. 11A is a front view of a valve for a freeze protection system in a first position, according to a further embodiment of the present disclosure.
FIG. 11B is a front view of the valve depicted in FIG. 10A, the valve being in a second position.
FIG. 12A is a front view of a valve for a freeze protection system in a first position, according to yet another embodiment of the present disclosure.
FIG. 12B is a front view of the valve depicted in FIG. 11A, the valve being in a second position.

### DETAILED DESCRIPTION

Valves and systems for preventing damage that can be caused by water freezing in piping systems and, more particularly, to freeze protection valves and systems for tankless water heaters, are disclosed herein.

The freeze protection systems disclosed herein are configured to actuate one or more valves to prevent water from entering a tankless water heater and to allow water to drain from the tankless water heater. The freeze protection system can be activated when there is a loss of power and the temperature of the air or of the water is at or near the freezing temperature of water. In other words, the freeze protection system can prevent the tankless water heater from being damaged by freezing water but will not be activated if power is still supplied to the tankless water heater and/or if the temperature of the water and/or the ambient air is greater than a low temperature threshold. In this way, the freeze protection system can ensure the tankless water heater is not drained unnecessarily such as when the ambient air temperatures are greater than the freezing temperature of water or when power is still supplied to the tankless water heater.

In some particular embodiments, the freeze protection system includes a valve actuator configured to automatically actuate one or more valves to permit water to drain from the tankless water heater when (1) electric power for heating and/or controlling the heating of water in the tankless water heater is lost, and (2) a temperature of a fluid in or around the tankless water heater is less than or equal to a predetermined low temperature threshold. For instance, the fluid may be the water in or supplied to the tankless water heater, or the air around the tankless water heater. For clarity, the phrase "in or around the tankless water heater" includes the water supply line to the tankless water heater.

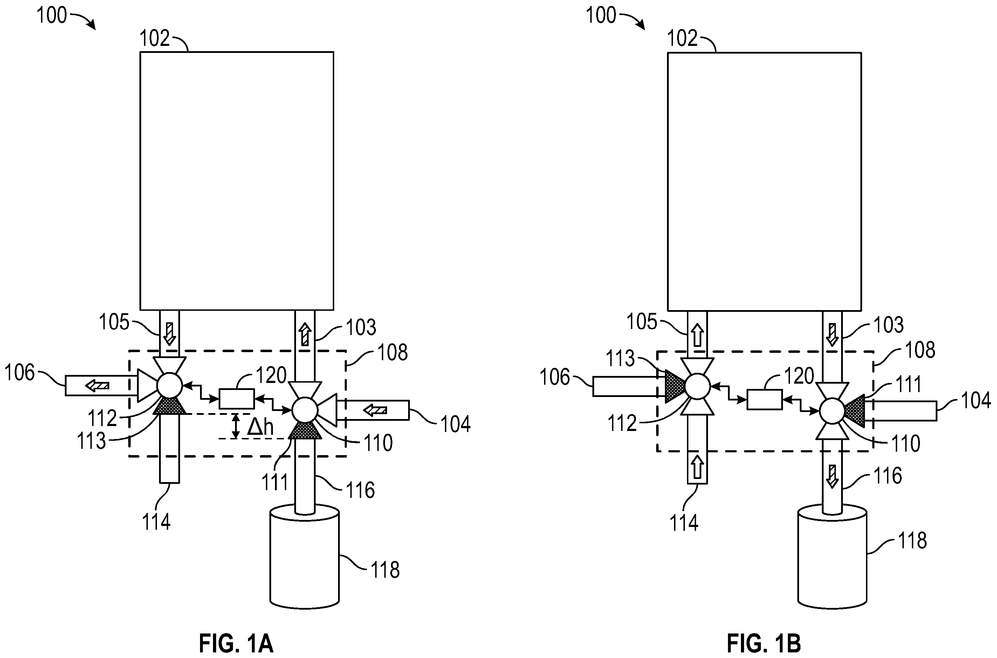

Referring now to the drawings, an embodiment of a tankless water heater system 100 is illustrated in FIGS. 1A-1B. Throughout the drawings, water is indicated by a solid arrow and air is indicated by a white or outlined arrow. The tankless water heater system 100 includes a tankless water heater 102 configured to heat water received from a water inlet 104, and tprovide heated water through a water outlet 106 to various end uses (e.g., a faucet, a dishwasher, a shower, a washing machine, industrial process systems, space heating, etc.). The tankless water heater 102 may be any type of tankless water heater, including a gas-fired or electric tankless water heater. Because the tankless water heater 102 may be installed, for example, on the outside of a home, in a garage, or in an attic, the tankless water heater 102 may be susceptible to ambient air temperatures that are at or below the freezing temperature of water. The tankless water heater 102, therefore, may be susceptible to freezing and/or damage. For example, the heat exchanger, piping, and/or vales of the tankless water heater 102 may crack, break, or otherwise be damaged as a result of the below-freezing temperatures.

To mitigate or prevent damage to the tankless water heater 102, the tankless water heater 102 includes a freeze protection system 108. The freeze protection system 108 prevents water from entering the tankless water heater 102 and drains water from the tankless water heater 102, when the tankless water heater 102 is susceptible to being damaged by below-freezing temperatures. In some embodiments, the freeze protection system 108 is configured to activate when power is lost to the tankless water heater 102 and the temperature of the ambient air and/or the water in the tankless water heater 102 is at or near a low temperature threshold. The low temperature threshold can be a temperature below which water in the tankless water heater 102 is likely to freeze. For example, the low temperature threshold may be 33°F (0.56°C), 34°F (1.1°C), 35°F (1.7°C), 36°F (2.2°C), 37°F (2.8°C), 38°F (3.3°C), 39°F (3.9°C), 40°F (4.4°C), or any other suitable temperature threshold as would be understood by those skilled in the art.

Furthermore, as would be understood by those skilled in the art, the disclosed technology can be used in systems designed to heat fluids other than water. Accordingly, the low temperature threshold can be a temperature below which the particular fluid in the system is likely to transition to a solid, or semi-solid state, whether or not that temperature is close to the freezing point of water (i.e., 32°F (0°C)).

The freeze protection system 108 includes an inlet valve 110, an outlet valve 112, and an actuator 120 that controls the position of the inlet valve 110 and the outlet valve 112, as shown in FIGS. 1A and 1B. FIG. 1A illustrates the tankless water heater system 100 with the freeze protection system 108 in a first position, whereas FIG. 1B illustrates the tankless water heater system 100 with the freeze protection system 108 in a second position.

In some embodiments, the actuator 120 is configured to actuate the inlet valve 110 and the outlet valve 112 to prevent water from entering the tankless water heater 102 and drain water from the tankless water heater 102. Eliminating water from the tankless water heater 102 mayprevent water from freezing in the tankless water heater 102, thereby mitigating or preventing damage to the tankless water heater 102. The actuator 120 may be an electrical, mechanical, electromechanical actuator, or any other suitable temperature threshold as would be understood by those skilled in the art. In some embodiments, the inlet valve 110 and the outlet valve 112 can each have separate actuators 120 configured to actuate just the inlet valve 110 or just the outlet valve 112, respectively. In further embodiments, the inlet valve 110 and the outlet valve 110 share a single actuator 120, where the actuator 120 is configured to actuate the inlet valve 110 and the outlet valve 112 independently.

In some embodiments, the inlet valve 110 and the outlet valve 112 are three-way valves with a first fluid path configured to permit water to flow through the tankless water heater 102 and a second fluid path configured to permit water to drain from the tankless water heater 102. The inlet valve 110 is connected to (i) a water inlet 104 connected to a water supply, (ii) an inlet line 103 connected to the tankless water heater 102, and (iii) a drain 116. The inlet valve 110 has an inlet valve plug 111 that is actuated between a first position and a second position.

As illustrated in FIG. 1A, when the inlet valve plug 111 is in the first position, the inlet valve plug 111 plugs the drain 116 to form the first fluid path, such that water passes through the inlet valve 110 from the water inlet 104 and to the tankless water heater 102 via the inlet line 103. As illustrated in FIG. 1B, when the inlet valve plug 111 is in the second position, the inlet valve plug 111 plugs the water inlet 104 to form the second fluid path, such that water is prevented from entering the tankless water heater 102. Water also drains from the tankless water heater 102 by flowing through the inlet line 103 and out the drain 116 when the inlet valve is in the second position. The water drained from the tankless water heater 102 may be collected in a collection tank 118.

In some embodiments, the outlet valve 112 is connected to (i) an outlet line 105 connected to the tankless water heater 102, (ii) the water outlet 106 to direct water from the tankless water heater 102 to various end uses, and (iii) an air inlet 114. The outlet valve 112 has an outlet valve plug 113 that is actuated between a first position and a second position. As illustrated in FIG. 1A, when the outlet valve plug 113 is in the first position, the outlet valve plug 113 plugs the air inlet 114 to form the first fluid path, permitting water to pass through the outlet valve 112 from the tankless water heater 102 via the outlet line 105 and to the water outlet 106. As illustrated in FIG. 1B, when the outlet valve plug 113 is in the second position, the outlet valve plug 113 plugs the water outlet 106 to form the second fluid path, preventing water from entering the tankless water heater 102. The air entering the air inlet 114 may facilitate draining of water from the tankless water heater 102 to the drain 116.

By permitting air to enter the tankless water heater 102, the air inlet 114 prevents the water from becoming stuck in the tankless water heater 102. In some embodiments, as shown in FIG. 1A, the inlet valve 110 may be positioned at a lower elevation than the outlet valve 112 (Δh), forming a pressure differential in the tankless water heater 102. The pressure differential may more effectively drain the water from the tankless water heater 102.

The inlet valve 110 and the outlet valve 112 may be any type of suitable valve, as would be understood by those skilled in the art. For example, the inlet valve 110 and the outlet valve 112 may be ball valves, globe valves, butterfly valves, diaphragm valves, needle valves, pinch valves, or plug valves. In some embodiments, the inlet valve 110 is the same as the outlet valve 112. In other embodiments, the inlet valve 110 is different from the outlet valve 112. Similarly, the inlet valve 110 and/or the outlet valve 112 may be actuated between the first position and the second position using any suitable type of actuator or actuation method, as would be understood by those skilled in the art.

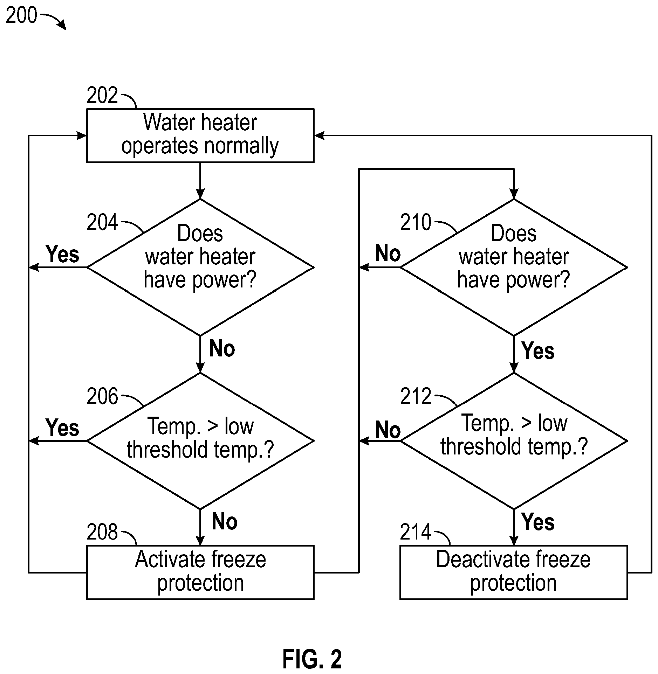

FIG. 2 illustrates a flow diagram of a method 200 of activating a freeze protection system (e.g., the freeze protection system 108). The method 200 includes operating 202 a water heater normally unless specific conditions are met. Operating 202 the water heater normally, for example, includes operating the water heater (e.g., the tankless water heater 102) according to a predetermined heating operation to supply heated water to an end use. In some embodiments, the method 200 includes determining 204 whether the water heater has power. For example, the method 200 includes determining whether power is supplied to the water heater via a utility grid, a battery, a photovoltaic energy supply, or other power sources. If power is being supplied to the water heater, the method includes continuing to operate 202 the water heater normally. The likelihood of water becoming frozen in the water heater is low if power is supplied to the water heater because the water heater can heat the water using its main heat source or by supplemental heat sources such as resistive heating elements or heat tape to prevent the water from freezing.

In some embodiments, if power is no longer being supplied to the water heater, the method 200 includes determining 206 whether the temperature of the air surrounding the water heater (e.g., the ambient air) is greater than a low threshold temperature. In some embodiments, the method includes determining 206 whether the temperature of the water in the water heater is greater than a low threshold temperature, instead of determining 204 whether the water heater has power. In other embodiments, the method includes determining 206 whether the temperature of the water in the water heater is greater than a low threshold temperature, in addition to determining 204 whether the water heater has power.

If the temperature of the air and/or water is greater than the low temperature threshold, the method includes continuing to operate 202 the water heater normally. If the temperature of the air (or the water) is less than or equal to the low temperature threshold, the method 200 includes activating 208 the freeze protection system (e.g., freeze protection system 108). Activating 208 the freeze protection system may include activating the freeze protection system using any of the devices and methods described herein.

Once the freeze protection system has been activated, the method 200 include once again determining 210 whether the water heater has power. If the water heater does not yet have power restored to it, the method 200 includes continuing to determine 210 whether the water heater has power. In some embodiments, continuing to determine 210 whether the water heater has power occurs continuously. In other embodiments, the continuing to determine 210 whether the water heater has power occurs periodically at a predetermined interval. For example, determining 210 whether the water heater has power may occur once every second, once every 5 seconds, once every 10 seconds, once every 30 seconds, once every minute, or once every several minutes. When the water heater does have power restored to it, the method 200 includes determining 212 whether the temperature of the ambient air and/or water is greater than the low temperature threshold. If the temperature of the ambient air and/or water is less than or equal to the low temperature threshold, the method includes continuing to determine 210 whether the water heater has power and determining 212 whether the temperature of the ambient air and/or water is greater than the low temperature threshold.

In some embodiments, the method 200 includes deactivating 214 the freeze protection system and once again operating 202 the water heater normally when the power has been restored and the temperature of the ambient air and/or is greater than the low temperature threshold. In some embodiments, the freeze protection system can be deactivated 214 if just the power is restored to the water heater. In other embodiments, the freeze protection system can be deactivated if just the temperature of the air and/or water is greater than the low temperature threshold. Deactivating 214 the freeze protection system includes actuating one or more valves to permit water to flow through the water heater and to prevent the water from draining from the water heater. Unless otherwise indicated, the freeze protection systems disclosed herein are configured to automatically deactivate when power is restored and/or when the temperature of the ambient air and/or is greater than the low temperature threshold.

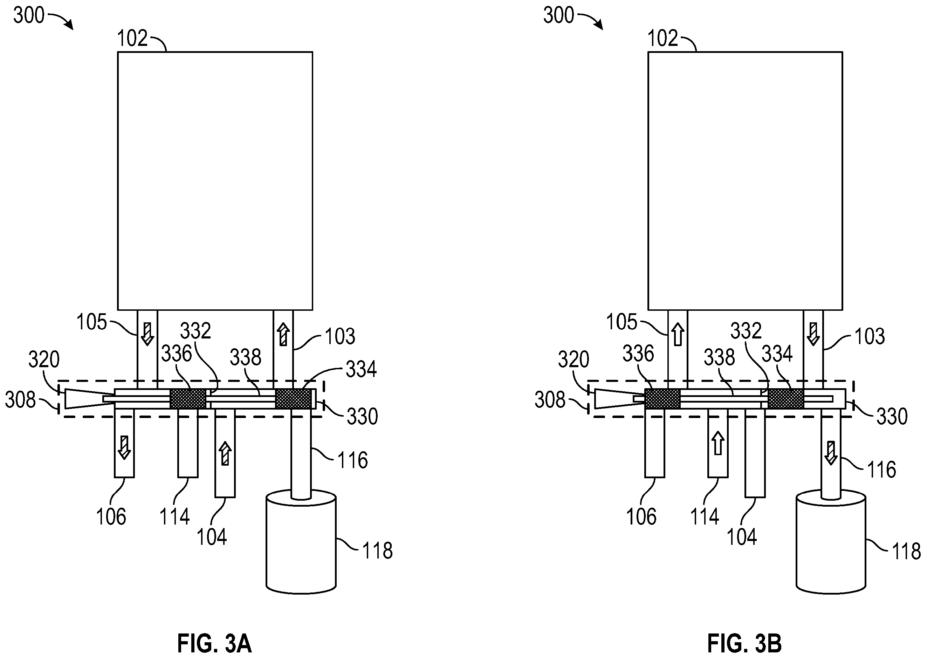

FIGS. 3A and 3B depict a tankless water heater system 300, according to an alternative embodiment. The tankless water heater system 300 includes all of the same components as the tankless water heater system 100, except that the freeze protection system 308 differs from the freeze protection system 108.

The freeze protection system 308 includes a single valve housing 330 having a partition 332 separating water flowing into the tankless water heater 102 from water flowing out of the tankless water heater 102. The freeze protection system 308 includes an actuator 320 configured to simultaneously actuate a first valve plug 334 and a second valve plug 336 via a mechanical linkage 338. The freeze protection system is configured to be activated upon the same conditions being met as described with respect to the method 200. That is, the freeze protection system 308 is activated upon loss of power and when the temperature of the ambient air and/or water is less than or equal to the low temperature threshold.

FIG. 3A illustrates the tankless water heater system 300 with the freeze protection system 308 in a first position, whereas FIG. 3B illustrates the tankless water heater system 300 with the freeze protection system 308 in a second position.

In some embodiments, the actuator 320 is configured to cause the first valve plug 334 and the second valve plug 336 to slide between the first position and the second position. In the first position, as shown in FIG. 3A, the first valve plug 334 plugs the drain 116 while the second valve plug 336 plugs the air inlet 114 to permit water to flow through the tankless water heater 102. In the second position, as illustrated in FIG. 3B, the first valve plug 334 plugs the water inlet 104 and the water outlet 106 to prevent water from entering the tankless water heater 102 and to permit the water to drain from the tankless water heater 102.

The actuator 320 may be any suitable actuator, as would be understood by those skilled in the art. For example, the actuator 320 may be a motor for a motor operated valve, a fluid reservoir and cylinder for pneumatic or hydraulic operated valve, a spring, or any other suitable actuator or combination of actuators. Various examples of actuators are described herein, each of which may be used with the disclosed valves and freeze protection systems. It therefore would be understood by those skilled in the art that, although an actuator or actuation method may be described as being used with a particular example of a valve, the actuator and actuation method can be used with any of valves described herein unless the context clearly dictates otherwise. Similarly, although a particular valve may be described as being used with a particular actuator or actuation method, the particular valve can be used with any of the actuators or actuation methods described herein.

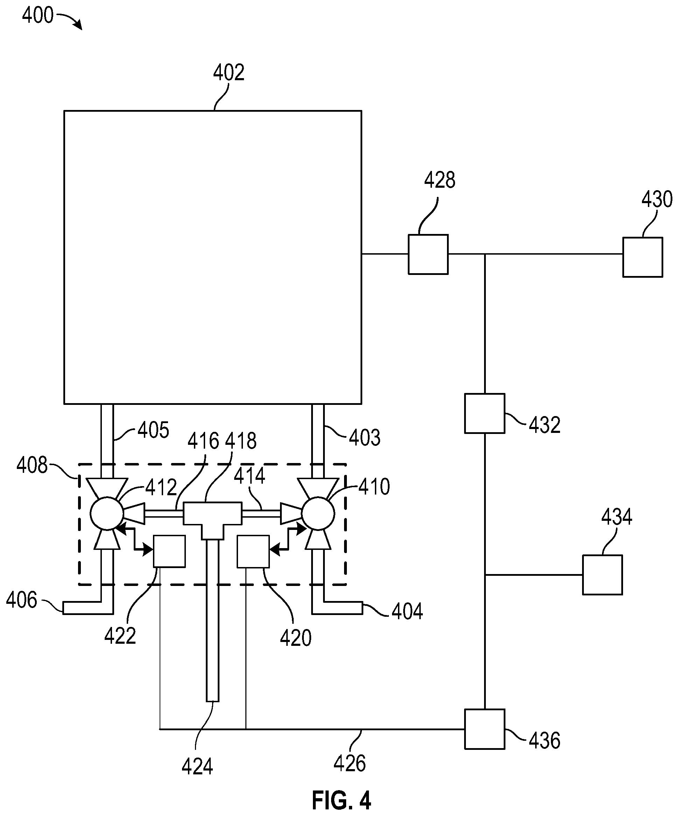

FIG. 4 illustrates a tankless water heater having a freeze protection system 408, according to a further embodiment. The freeze protection system 408 includes an inlet valve 410 having a corresponding inlet actuator 420, and an outlet valve 412 having a corresponding outlet actuator 422. In some embodiments, the inlet actuator 420 and the outlet valve 422 are configured to actuate the inlet valve 410 and the outlet valve 412, respectively, to prevent water from entering the tankless water heater 402 and drain water from the tankless water heater 402. As with actuator 120, the inlet actuator 420 and the outlet actuator 422 may be electrical, mechanical, or electromechanical actuators, or any other suitable actuators as would be understood by those skilled in the art. In some embodiments, the inlet actuator 420 is the same as the outlet actuator 422. In other embodiments, the inlet actuator 420 is different from the outlet actuator 422.

In some embodiments, the inlet valve 410 and the outlet valve 412 are three-way valves with a first fluid path configured to permit water to flow through the tankless water heater 420 and a second fluid path configured to drain water from the tankless water heater 420. The inlet valve is connected to (i) a water inlet 404 connected to a water supply, (ii) an inlet line 403 connected to the tankless water heater 402, and (iii) an inlet drain line 414. Similar to inlet valve 110, inlet valve 410 has an inlet valve plug (not shown) that is actuated between a first position and a second position.

When the inlet valve plug is in the first position, the inlet valve plug plugs the inlet drain line 414 to form the first fluid path, such that water passes through the inlet valve 410 from the water inlet 404 and to the tankless water heater 402 via the inlet line 403. When the inlet plug is in the second position, the inlet valve plug plugs the water inlet 404 to form the second fluid path, such that water is prevented from entering the tankless water heater 402. Water also drains from the tankless water heater 402 by flowing through the inlet line 403 and out the inlet drain line 414 when the inlet valve 410 is in the second position.

In some embodiments, the outlet valve 412 is connected to (i) an outlet line 405 connected to the tankless water heater 402, (ii) the water outlet 406 to direct water from the tankless water heater 402 to various end uses, and (iii) an outlet drain line 416. The outlet valve 412 has an outlet valve plug (not shown) that is actuated between a first position and a second position. When the outlet valve plug is in the first position, the outlet valve plug plugs the outlet drain line 416 to form the first fluid path, permitting water to pass through the outlet valve 412 from the tankless water heater 402 via the outlet line 405 and to the water outlet 406. When the outlet valve plug is in the second position, the outlet valve plug plugs the water outlet 406 to form the second fluid path, preventing water from entering the tankless water heater 402. Water also drains from the tankless water heater 402 by flowing through the outlet line 405 and out the outlet drain line 416 when the outlet valve 412 is in the second position.

When both the inlet valve 410 and the outlet valve 422 are in the second position, water is configured to drain from the inlet drain line 414 and outlet drain line 416 to a tee connector 418 attached to a combined drain line 424. The tee connector 418 is configured to direct water from the inlet drain line 414 and outlet drain line 416 to the combined drain line 424. The tee connector 418 may be any suitable tee connector, as would be understood in the art. For example, the tee connector 418 may be made of plastic, metal, polyvinyl chloride (PVC), or any other suitable material as would be understood by those skilled in the art. The tee connector 418 may also be of a particular size, such as ¾" inch, or any suitable size as would be understood by those skilled in the art.

In some embodiments, the tankless water heater system 400 also includes an on-delay timer 428. The on-delay timer 428 may be a delay relay switch with adjustable time settings, as would be understood by those skilled in the art. One non-limiting example is the Samwha-dsp Erv-30d On Delay Time Relay Electronic Adjustable (0.1-30min.) Timer Relay Digital Protection Relay. The on-delay timer 428 is connected to the freeze protection system 408 and the tankless water heater 402 via a power supply line 426. The power supply line 426 is connected to, at least, the inlet actuator 420, outlet actuator 422, inlet valve 410, and outlet valve 412, such that the inlet actuator 420, outlet actuator 422, inlet valve 410, and outlet valve 412 are in electronic communication with the on-delay timer 428.

In some embodiments, the on-delay timer 428 delays delivering power to the tankless water heater 402 after power has been restored and the temperature of the ambient air and/or water is greater than the low temperature threshold. The on-delay time 428 may be in electrical communication with a power outlet 430 via the power supply line 426, such that electrical current from the power outlet 430 is intercepted by the on-delay timer 428 before reaching the tankless water heater 402. Simultaneously, power may be restored to other components of the tankless water heater system 400, such as the components of the freeze protection system 408. While power restoration to the tankless water heater 402 is delayed via the on-delay timer 428, power from the power outlet 430 may pass through the power supply line 426 to an alternating current (AC) relay 432, which is responsible for supplying power to at least a temperature control unit 434 and a battery 436. The battery 436 is directly responsible for supplying power to the freeze protection system 408. The freeze protection system 408 will be deactivated when power is restored.

When the freeze protection system 408 is deactivated, the restored power may be circulated within the tankless water heater 402 via the electrical circuit created by the power supply line 426. The on-delay timer 428 intercepts the power from the power supply line 426, preventing changeover (i.e., closing) of the circuit within the on-delay timer 428 for the designated delay period while the freeze protection system 408 is deactivating. For example, the delay period may be between 1 second to 30 minutes, 5 seconds to 30 minutes, 10 seconds to 30 minutes, 15 seconds to 30 minutes, 30 seconds to 30 minutes, 45 seconds to 30 minutes, 1 minute to 30 minutes, 1 minute to 25 minutes, 1 minute to 20 minutes 1 minute to 15 minutes, 5 minutes to 15 minutes, or 10 minutes to 15 minutes, among other suitable ranges which would be recognized by those skilled in the art. After the delay period has passed, the circuit within the on-delay timer 428 closes so that power may continue to flow via the power supply line 426 to the tankless water heater 402. That is, when power is restored, the on-delay timer 428 delay transmission of power to the tankless water heater 402 for the designated delay period.

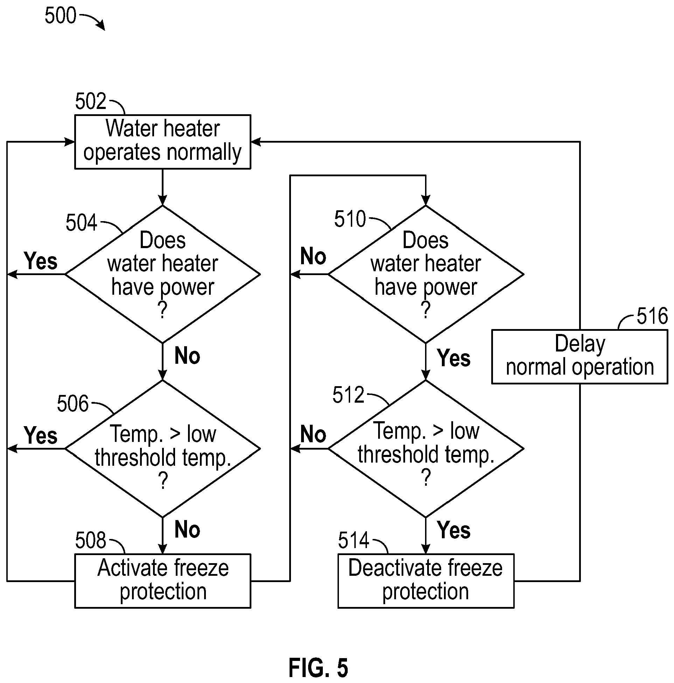

FIG. 5 illustrates a flow diagram of a method 500 of activating a freeze protection system (e.g., the freeze protection system 408). The method 500 may be similar to method 200, except for the steps of deactivating the freeze protection system. The method 500 includes operating 502 a water heater normally unless specific conditions are met. Operating 502 the water heater normally, for example, includes operating the water heater (e.g., the tankless water heater 402) according to a predetermined heating operation to supply heated water to an end use.

When the freeze protection system has been activated, the method 500 includes once again determining 510 whether the water heater has power. If the water heater does have power restored to it, the method 500 can include determining 512 whether the temperature of the ambient air and/or water is greater than the low temperature threshold. If the temperature of the ambient air and/or water is less than or equal to the low temperature threshold, the method can include continuing to determine 510 whether the water heater has power and determining 512 whether the temperature of the ambient air and/or water is greater than the low temperature threshold.

If the power has been restored and the temperature of the ambient air and/or water is greater than the low temperature threshold, the method 500 can include deactivating 514 the freeze protection system. Alternatively, the freeze protection system can be deactivated 514 if just the power is restored to the water heater or if just the ambient temperature is greater than the low temperature threshold. Before operating 502 the water heater normally, an on-delay timer (e.g., on delay timer 422) may delay 516 normal operation 502 of the water heater after power has been restored. Where deactivating 514 the freeze protection system includes actuating one or more valves to permit water to flow through the water heater and to prevent the water from draining from the water heater, delaying 516 normal operation 502 of the water heater may involve delaying actuating one or more valves for a pre-determined period of time. Alternatively, delaying 516 normal operation 502 of the water heater may only involve delaying the restoration of the flow of water through the water heater.

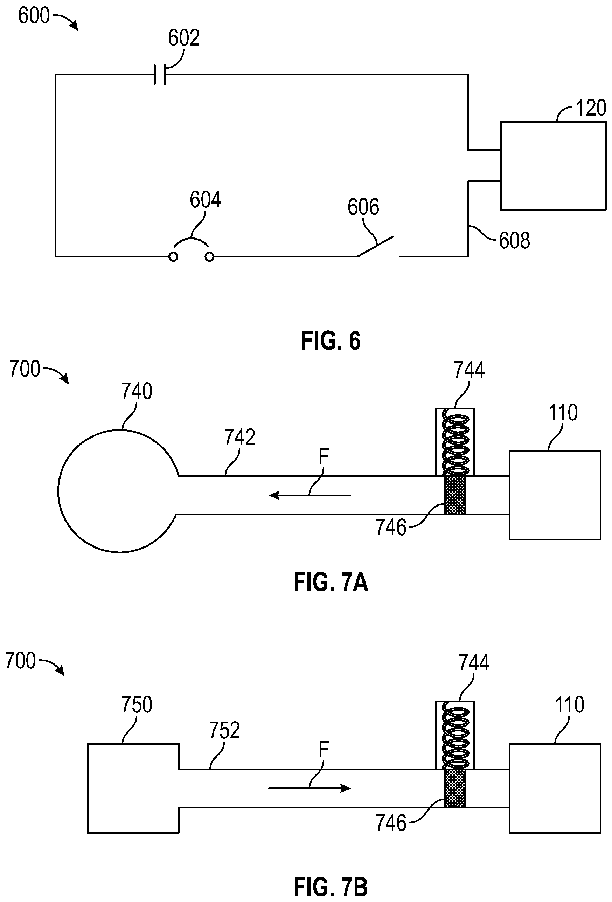

FIGS. 6A-7B illustrate various actuators and methods of actuating a valve (e.g., inlet valve 110, outlet valve 112, first valve plug 334, second valve plug 336, etc.) of the freeze protection system (e.g., freeze protection system 108, 308, 408). Although a particular valve may be referred to when describing the various actuators and actuation methods, it would be understood by those skilled in the art that the valve may include any valve described herein.

FIG. 6 illustrates an electrical circuit 600 for providing power to an actuator (e.g., actuator 120, 320, 420) if power is lost to the tankless water heater and the temperature of the ambient air and/or water is less than or equal to the low temperature threshold. The electrical circuit 600 includes an energy storage device 602, such as a battery or a capacitor, to store energy that is used to power the actuator when power to the tankless water heater is lost. In some embodiments, the electrical circuit 600 also includes a thermostatic switch 604 configured to close when the temperature of the ambient air and/or water is less than or equal to the low temperature threshold. The thermostatic switch 604 may include any suitable thermostatic actuator to cause the thermostatic switch 604 to close. The thermostatic switch 604, for example, may include a bimetallic disc, a bimetallic ribbon, a bellows and thermostatic fluid, an expandable wax, or another suitable thermostatic actuator, as would be understood by those skilled in the art.

In some further embodiments, the electrical circuit 600 also includes a power switch 606 that is configured to close when power is lost to the tankless water heater 102. For example, the power switch 606 may be a normally closed solenoid switch that is configured to (1) remain open when power is supplied to the tankless water heater 102 and (2) automatically close when power to the tankless water heater 102 is lost. If the temperature of the ambient air and/or water is less than the low temperature threshold such that the thermostatic switch 604 closes but the power switch 606 remains open, the actuator will not be powered, and the freeze protection system will not be activated. If power is lost to the tankless water heater such that the power switch 606 closes but the thermostatic switch 604 remains open, the actuator will not be powered, and the freeze protection system will not be activated. If both the thermostatic switch 604 and the power switch 606 are closed, however, the energy storage device 602 discharges stored energy via electrical lines 608 to the actuator to activate the freeze protection system.

The energy storage device 602 is sized to discharge enough energy to the actuator to cause the actuator to actuate one or more valves of the freeze protection system and permit water to drain from the tankless water heater. For example, if the actuator is a motor for a motor operated valve, the energy storage device 602 stores enough energy to cause the motor of the motor operated valve to fully actuate the one or more valves of the freeze protection system 108.

FIGS. 7A and 7B illustrates an actuating device for actuating a valve (e.g., inlet valve, outlet valve 112, first valve plug 334, second valve plug 336, etc.) of the freeze protection system (e.g., freeze protection system 108, 308, 408). As shown in FIG. 7A, the valve is connected to a gas line 742, the gas line 742 being connected to a gas reservoir 740 (e.g., a pneumatic actuator). The gas in the gas reservoir 740 is configured to contract and create a negative pressure when the temperature of the ambient air and/or water is less than or equal to the low temperature threshold. As the gas in the gas reservoir 740 creates a negative pressure, the force (F) created by the negative pressure causes the valve to actuate from the first position to the second position.

In some embodiments, a solenoid valve 744 is installed in the gas line 742 between the valve and the gas reservoir 740. The solenoid valve 744 includes a valve plug 746 that creates a seal in the gas line 742 such that the valve is isolated from the negative pressure created by the gas in the gas reservoir 740. The solenoid valve 744 is configured to actuate to an open position upon loss of power to the tankless water heater. In some embodiments, the solenoid valve 744 is a normally open solenoid valve that can move the valve plug 746 to an open position upon loss of power to the tankless water heater. If the temperature of the ambient air and/or water is less than or equal to the low threshold temperature such that the gas in the gas reservoir is creating a negative pressure in the gas line 742, a loss of power to the tankless water heater opens the solenoid valve 744 and cause the valve to actuate. If power is lost to the tankless water heater and the solenoid valve 744 actuates, but the temperature of the ambient air and/or water is greater than the low temperature threshold, the gas in the gas reservoir 740 will not create a negative pressure sufficient to actuate the valve. Accordingly, the actuator of FIG. 7A may actuate the valve only when (1) power is lost and (2) the temperature of the ambient air and/or water is less than or equal to the low temperature threshold.

In other embodiments, the solenoid valve 744 is a normally closed solenoid valve configured to open the gas line 742 to the atmosphere unless power is lost to the tankless water heater. If the temperature of the ambient air is less than the low temperature threshold but power is still supplied to the tankless water heater, the vacuum created by the temperature drop in the gas reservoir will draw air into the gas line 742 rather than cause the valve to actuate. If power is lost to the tankless water heater and the temperature of the ambient air is less than the low temperature threshold, the gas in the gas reservoir will be able to create a vacuum sufficient to cause the valve to actuate.

Referring now to FIG. 7B, the valve is connected to a liquid line 752 that is connected to a liquid reservoir 750 (e.g., a hydraulic actuator). The liquid reservoir 750 contains a liquid configured to expand when the liquid is at or near the low temperature threshold. As the liquid expands in the liquid reservoir 750 and the liquid line 752, the liquid forms positive pressure in the liquid reservoir 750 and the liquid line 750. The positive force (F) created by the expanding liquid is sufficient to actuate the valve from the first position to the second position. In some embodiments, similar to the actuation device of FIG. 7A, a solenoid valve 744 is installed in the liquid line 752 between the liquid reservoir 750 and the valve to prevent the valve from actuating if power is still supplied to the tankless water heater.

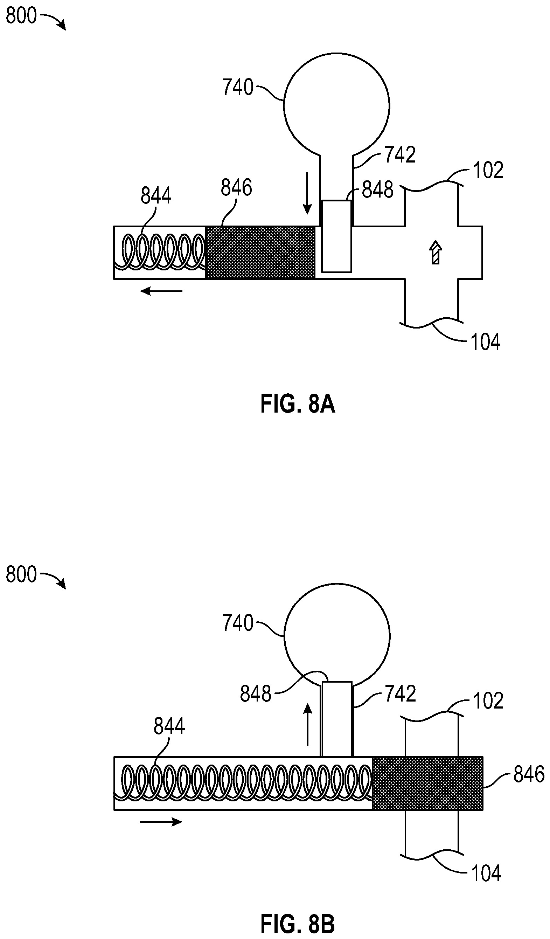

FIGS. 8A and 8B illustrate another actuating device for actuating a valve (e.g., inlet valve 110, outlet valve 112, first valve plug 334, second valve plug 336, etc.) of the freeze protection system (e.g., freeze protection system 108, 308, 408). FIG. 8A illustrates a valve assembly 800 having a valve plug 846 in a first (open) position, whereas FIG. 8B illustrates the valve assembly 800 having the valve plug 846 in a second (closed) position.

As illustrated in FIG. 8A, the valve plug 846 is connected to a solenoid 844 that is configured to close a fluid path from the water inlet to the water heater when power is lost to the tankless water heater. That is, the solenoid 844 retains the valve plug 846 in the first position when power is supplied to the tankless water heater, and causes the valve plug 846 to move to the second position when power to the tankless water heater is lost. In some embodiments, the valve plug 846 is part of a normally closed solenoid valve having solenoid 844 with a spring configured to move the valve plug 846 into the fluid pathway of the tankless water heater to prevent water from entering the tankless water heater when power is lost to the tankless water heater. As will be appreciated, the valve plug 846 can be representative of any of the valves shown and described herein.

In some embodiments, the valve assembly 800 includes a pin 848 extending into a pathway of the valve plug 846 such that the valve plug 846 is prevented from sliding to the closed position by the pin 848. The pin 848 is connected to the gas line 742 and the gas reservoir 740 such that the pin 848 can be moved out of the way of the valve plug 846 if the temperature of the ambient air is less than or equal to the low temperature threshold, as shown in FIG. 8B. As the gas in the gas reservoir 740 contracts and creates a negative pressure on the pin 848, the pin 848 will be caused to move out of the way of the valve plug 846. The valve assembly 800 will only permit the valve plug 846 to move to the closed position if there is a loss of power and the temperature of the ambient air and/or is less than or equal to the low temperature threshold. That is, the pin 848 will prevent the valve plug 846 from moving to the closed position if power is lost but the temperature of the ambient air and/or water is greater than the low temperature threshold. Conversely, the solenoid 844 will prevent the valve plug 846 from moving to the closed position if the temperature of the ambient air and/or water is less than or equal to the low temperature threshold but power is still supplied to the tankless water heater.

Although FIGS. 8A and 8B are illustrated as having a gas line 742 to move the pin 848, it would be understood by those skilled in the art that the valve assembly 800 can include a liquid reservoir (e.g., liquid reservoir 750), a bi-metallic device, and/or a circuit with a thermoelectrical switch. In other words, the valve assembly 800 can include any of the methods or systems described herein that is capable of actuating the pin 848 based on temperature.

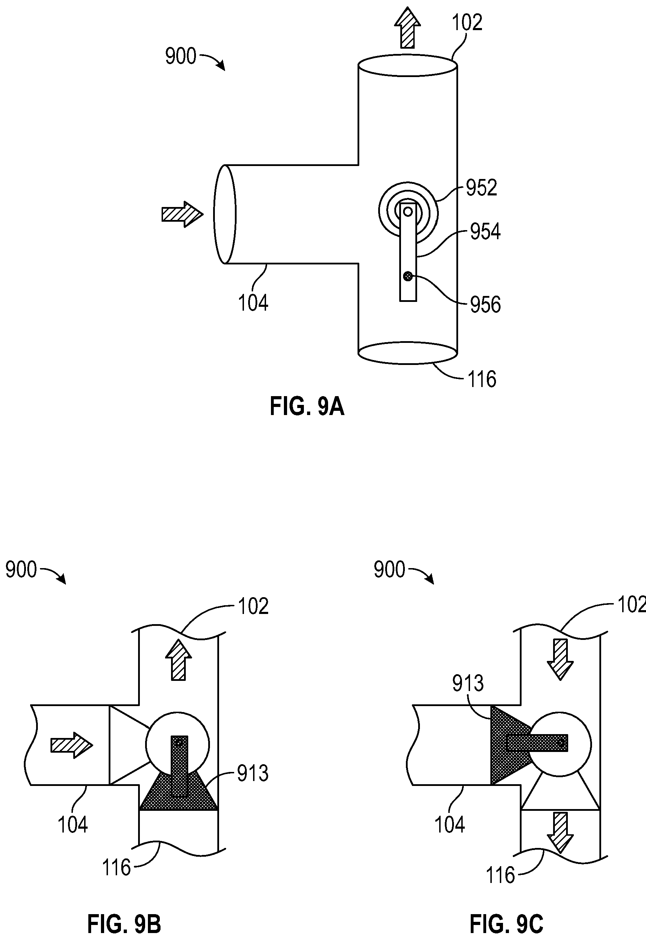

FIGS. 9A-12B illustrate various embodiments of valves (e.g., inlet valve 110, outlet valve 112, first valve plug 334, second valve plug 336, etc.) suitable for use in the freeze protection system (e.g., freeze protection system 108, 308, 408).

FIGS. 9A-9C illustrate a valve 900 for a freeze protection system (e.g., freeze protection system 108, 308, 408). A front view of the exterior of a valve 900 for a freeze protection system (e.g., freeze protection system 108, 308) is shown in FIG. 9A. In some embodiments, the valve 900 is a three-way valve installed in a fluid pathway of the tankless water heater. In some embodiments, the valve 900 can be installed between the water inlet, the tankless water heater, and the drain. FIG. 9B illustrates a front view of the interior of the valve 900 in a first position, whereas FIG. 9C illustrates a front view of the interior of the valve 900 in a second position.

In some embodiments, the valve 900 includes a spring-loaded actuator 952 configured to automatically move a valve plug 913 from a first position to a second position. In some embodiments, the spring-loaded actuator 952 includes, for example, a torsion spring. The spring-loaded actuator 952 is pre-loaded such that the spring-loaded actuator 952 applies a force on the valve plug 913 to move the valve plug 913 from the first position to the second position. The spring-loaded actuator 952 applies a force on the valve plug 913 as soon as power is lost to the tankless water heater and the temperature of the ambient air and/or water is less than or equal to the low temperature threshold. The spring-loaded actuator 952 is prevented from moving the valve plug 913 from the first position to the second position by a pin 956 that extending into a pathway of a handle 954, the handle 954 being attached to the spring-loaded actuator 952. The pin 956 is configured to be moved out of a pathway of the handle 954 when power is lost to the tankless water heater and the temperature of the ambient air (or the water) is less than or equal to the low temperature threshold. In some embodiments, for example, the pin 956 is connected to a solenoid and a gas or fluid reservoir as described with respect to FIGS. 6-8B. That is, the actuation devices described with respect to FIGS. 6-8B may be used to change a position of the pin 956, rather than the valve.

In some embodiments, the handle 954 is configured to reset the valve plug 913 back to the first position after the spring-loaded actuator 952 has moved the valve plug 913 to the second position. For example, if power is lost to the tankless water heater and the temperature of the ambient air (or the water) is less than or equal to the low temperature threshold, the valve plug 913 will be moved to the second position. To reset the valve 900, a user must rotate the handle 954 back to the first position. After power is restored to the tankless water heater and the temperature of the ambient air and/or water is greater than the low temperature threshold, the pin 956 extends outwardly into the pathway of the handle 954 such that the pin 956 prevents the handle 954 from moving to the second position once a user resets the valve 900.

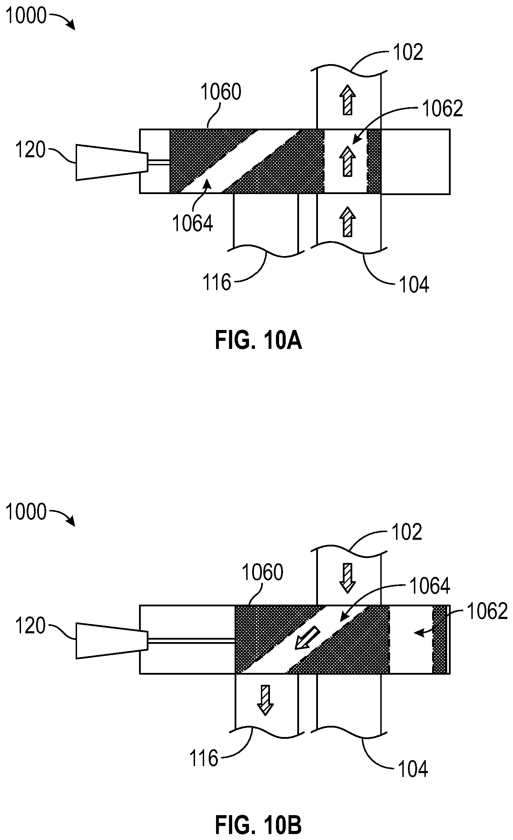

FIGS. 10A and 10B illustrate another exemplary valve 1000 for a freeze protection system (e.g., freeze protection system 108, 308, 408). The valve 1000 may be used in place of, or in addition to, any of the valves described herein and may be used with any of the actuators disclosed herein. Although the valve 1000 is illustrated as being in a fluid pathway between the water inlet, the tankless water heater, and the drain, the valve 1000 can be also installed between the water outlet, the tankless water heater, and the air inlet. FIG. 10A illustrates the valve 100 in a first position, whereas FIG. 10B illustrates the valve 1000 in a second position.

In some embodiments, as illustrated in FIGS. 10A and 10B, the valve 1000 includes a valve plug 1060 configured to slide between a first position permitting water to flow through the tankless water heater, and a second position permitting water to drain from the tankless water heater and preventing water from entering the tankless water heater. The valve plug 1060 includes a first fluid pathway 1062 configured to permit water to flow from the water inlet and to the tankless water heater when the valve plug is in the first position. The valve plug 1060 further includes a second fluid pathway 1064 configured to permit water to drain from the tankless water heater and to the drain. Although the first fluid pathway 1062 is shown as extending in a vertical and linearly fashion through the valve plug 1060, the first fluid pathway 1062 may extending diagonally or even in a non-linear fashion through the valve plug 1060. Similarly, although the second fluid pathway 1064 is shown as extending diagonally in a linear fashion through the valve plug 1060, the second fluid pathway 1064 may extend vertically or in a non-linear fashion through the valve plug 1060.

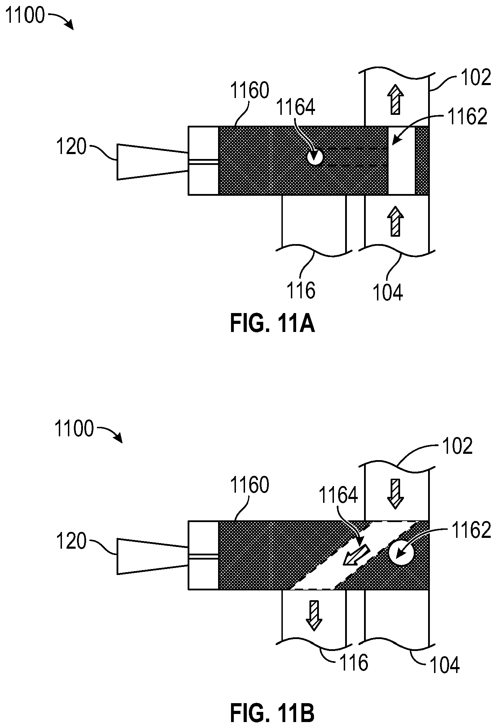

FIGS. 11A and 11B illustrate yet another exemplary valve for a freeze protection system (e.g., freeze protection system 108, 308, 408). The valve 1100 may be used in place of, or in addition to, any of the valves described herein and may be used with any of the actuators disclosed herein. FIG. 11A illustrates the valve 1100 in a first position, whereas FIG. 11B illustrates the valve 1100 in a second position.

In some embodiments, and similar to the valve 1000, the valve 1100 includes a first fluid pathway 1162 configured to permit water to flow through the valve plug 1160 from the water inlet and to the tankless water heater, and a second fluid pathway 1164 configured to permit water to flow through the valve plug 1160 from the tankless water heater and to the drain. Unlike the valve 1000, however, the valve 1100 is configured to rotate between the first and second positions. When the valve is rotated to the first position, as shown in FIG. 11A, the first fluid pathway 1162 permits the water to flow from the water inlet and to the tankless water heater. When in valve 1100 is rotated to the second position, as shown in FIG. 11B, the second fluid pathway 1164 permits the water to flow from the tankless water heater and to the drain while the valve plug 1160 also blocks the water from the water inlet.

In some embodiments, the actuator is configured to actuate the valve plug 1160 in a similar manner to that described in relation to FIGS. 9A-9C. That is, the actuator may include a spring-loaded actuator configured to rotate the valve plug 1160 from the first position to the second position. In other embodiments, the actuator may be any of the actuators disclosed herein, such that the valve plug 1160 is prevented from moving from the first position to the second position until power is lost to the tankless water heater and the temperature of the ambient air and/or water is less than or equal to the low temperature threshold. For example, the actuator may include a pin similar to the pin 956 that is configured to prevent the valve plug 1160 from rotating from the first position to the second position.

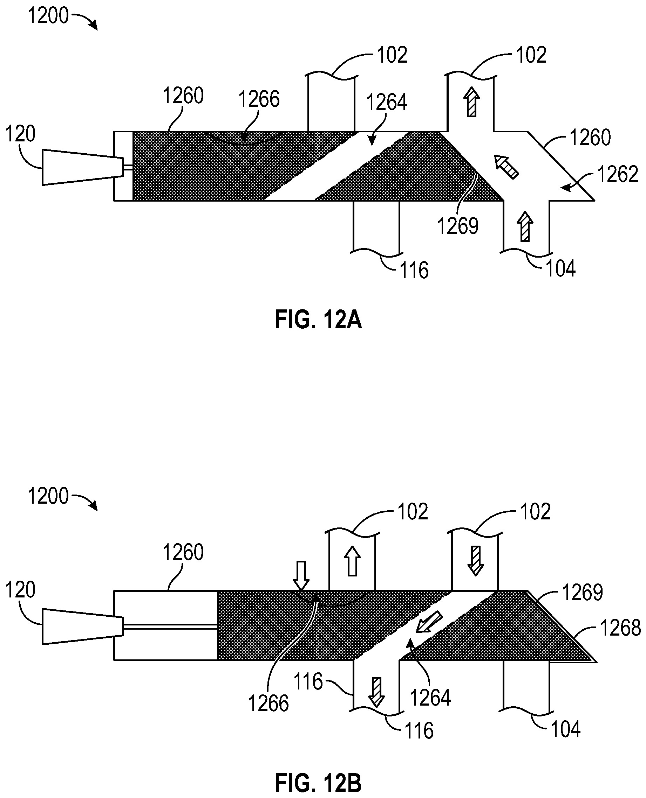

FIGS. 12A-12B illustrate an additional exemplary embodiment of a valve 1200 for a freeze protection system (e.g., freeze protection system 108, 308, 408). The valve 1200 may be used in place of, or in addition to, any of the valves described herein and may be used with any of the actuators disclosed herein. FIG. 12A illustrates the valve 1200 in a first position, whereas FIG. 12B illustrates the valve 1200 in a second position.

In some embodiments, the valve 1200 includes a valve plug 1260 configured to form a first fluid pathway 1262 through the valve 1200 from the water inlet and to the tankless water heater, as shown in FIG. 12A. The valve plug 1260 further includes a second fluid pathway 1264 extending between the tankless water heater and the drain when the valve plug 1260 is in the second position, as shown in FIG. 12B. However, unlike the valves 1000 and 1100, the valve 1200 also includes a third fluid pathway 1266 extending between the ambient air (or the air inlet) and the tankless water heater to permit air to flow into the tankless water heater when the valve plug 1260 is in the second position. The third fluid pathway 1266 extends around an outer periphery of the valve plug 1260 such that the third fluid pathway 1266 is formed between the valve plug 1260 and a body of the valve 1200. The air can therefore enter the third fluid pathway 1266 at a height that is greater than the drain to facilitate a pressure differential to allow the water to drain from the tankless water heater.

In some embodiments, the valve 1200 includes a sloped end 1268 and the valve plug 1260 includes a corresponding sloped end 1269. The corresponding sloped end 1269 is configured to contact the sloped end 1268 when the valve moves to the second position such that the valve plug 1260 is correctly aligned. That is, the sloped end 1268 and the corresponding sloped end 1269 prevent the valve plug 1260 from becoming misaligned such that the various fluid paths reduce, or altogether prevent, the water and/or air from flowing through the valve plug 1260.

### Embodiments

Embodiment 1. A freeze protection system comprising: a first valve configured for fluid communication with an inlet of a water heater; a second valve configured for fluid communication with an outlet of the water heater; and a valve actuator configured to automatically actuate the first valve and the second valve to permit water to drain from the water heater when (1) electric power is lost to the water heater, and (2) a temperature of a fluid in or around the water heater is less than or equal to a predetermined low temperature threshold.

Embodiment 2. The freeze protection system of Embodiment 1, wherein the valve actuator comprises a solenoid switch configured to transition between an open state and a closed state.

Embodiment 3. The freeze protection system of Embodiment 1 or 2, wherein the valve actuator further comprises a temperature switch configured to close when the temperature of the fluid is less than or equal to the low temperature threshold.

Embodiment 4. The freeze protection system of Embodiment 3, wherein the temperature switch comprises a bimetal component configured to cause the temperature switch to close when the temperature of the fluid is less than or equal to the low temperature threshold.

Embodiment 5. The freeze protection system of Embodiment 3, wherein the temperature switch comprises a pneumatic actuator having a gas that is configured to contract when the temperature of the fluid is less than or equal to the low temperature threshold, thereby causing the temperature switch to close.

Embodiment 6. The freeze protection system of Embodiment 3, wherein the temperature switch comprises a hydraulic actuator having a liquid that is configured to expand when the temperature of the fluid is less than or equal to the low temperature threshold, thereby causing the temperature switch to close.

Embodiment 7. The freeze protection system of any one of Embodiments 3 to 6, further comprising an energy storage device, wherein, when a power switch is closed and the temperature switch is closed, the energy storage device is configured to discharge and cause the first valve and the second valve to actuate, thereby permitting the water to drain from the water heater.

Embodiment 8. The freeze protection system of any one of Embodiments 1 to 7, wherein the valve actuator comprises a solenoid valve configured to transition from an open state to a closed state when the electric power is lost to the water heater, such that when the solenoid valve is in the open state, the solenoid valve permits water to flow into the water heater, and when the solenoid valve is in the closed state, the solenoid valve prevents water from flowing into the water heater.

Embodiment 9. The freeze protection system of Embodiment 8, wherein the valve actuator further comprises a temperature actuator configured to permit the solenoid valve to transition to the closed state when the temperature of the fluid is less than or equal to the low temperature threshold, and prevent the solenoid valve from transitioning to the closed state when the temperature of the fluid is greater than or equal to the low temperature threshold.

Embodiment 10. The freeze protection system of Embodiment 9, wherein the temperature actuator comprises an elongated portion configured to extend into a pathway of the solenoid valve when the temperature of the fluid is greater than the low temperature threshold, thereby preventing the solenoid valve from transitioning to the closed state, and retract out of the pathway of the solenoid valve when the temperature of the fluid is less than or equal to the low temperature threshold, thereby permitting the solenoid valve to transition to the closed state.

Embodiment 11. The freeze protection system of Embodiment 9, wherein the temperature actuator comprises a pneumatic actuator having a gas that is configured to contract when the temperature of the fluid is less than or equal to the low temperature threshold, thereby causing the temperature actuator to retract out of the pathway of the solenoid valve.

Embodiment 12. The freeze protection system of Embodiment 9, wherein the temperature actuator comprises a hydraulic actuator having a liquid that is configured to expand when the temperature of the fluid is less than or equal to the low temperature threshold, thereby causing the temperature actuator to retract out of the pathway of the solenoid valve.

Embodiment 13. The freeze protection system of any one of Embodiments 1 to 12, wherein the first valve is at a different elevation than that of the second valve.

Embodiment 14. The freeze protection system of any one of Embodiments 1 to 13, further comprising an on-delay timer configured to delay re-supply of electric power to the water heater for a period after restoration of electric power.

Embodiment 15. The freeze protection system of any one of Embodiments 1 to 14, wherein the water heater is a tankless water heater.

Embodiment 16. A water heater comprising: a tank having a water inlet and a water outlet; and the freeze protection system of any one of Embodiments 1 to 15, wherein the first valve is connected to and in fluid communication with the water inlet, and the second valve is connected to and in fluid communication with the water outlet.

Embodiment 17. The water heater of Embodiment 16, comprising a valve assembly which comprises: a first fluid pathway configured to permit water to flow from a water source and through the water heater; a second fluid pathway configured to permit the water to drain from the water heater; and a plug configured to transition between a first position and a second position, the plug being configured to open the first fluid pathway and close the second fluid pathway when in the first position, and close the first fluid pathway and open the second fluid pathway when in the second position, wherein the valve actuator is configured to automatically actuate the plug from the first position and to the second position when (1) electric power is lost to the water heater, and (2) the temperature of the fluid in or around the water heater is less than or equal to the predetermined low temperature threshold.

Embodiment 18. The water heater of Embodiment 17, wherein the valve actuator comprises: a solenoid valve configured to transition from a first state to a second state when power is lost to the water heater, such that when the solenoid valve is in the first state, the solenoid valve is configured to cause the plug to be in the first position, and when the solenoid valve is in the second state, the solenoid valve is configured cause the plug to be in the second position; and a temperature actuator configured to permit the solenoid valve to transition to the second state when the temperature of the fluid is less than or equal to the low temperature threshold, and prevent the solenoid valve from transitioning to the second state when the temperature of the fluid is greater than or equal to the low temperature threshold.

Embodiment 19. A method of controlling a freeze protection system, the method comprising: actuating a first valve and a second valve, wherein the first valve is in fluid communication with an inlet of a water heater and the second valve is in fluid communication with an outlet of the water heater, to permit water to drain from the water heater upon both (1) loss of electric power to the water heater, and (2) a temperature of a fluid in or around the water heater being less than or equal to a predetermined low temperature threshold.

Embodiment 20. The method of Embodiment 19, wherein the first valve and the second valve are configured to transition: from an open state to a closed state when (1) the electric power is lost to the water heater and (2) the temperature of the fluid is less than or equal to the predetermined low temperature threshold, such that in the closed state water is prevented from flowing into the water heater; and from a closed state to an open state when (1) the electric power is restored to the water heater, or (2) the temperature of the fluid is greater than the predetermined low temperature threshold, such that in the open state water is permitting to flow into the water heater.

Embodiment 21. The method of Embodiment 19 or 20, further comprising: delaying, via an on-delay timer, re-supply of electric power to the water heater for a predetermined period after restoration of electric power.

Embodiment 22. The method of any one of Embodiments 19 to 21, wherein the water heater is a tankless water heater.

While the present disclosure has been described in connection with a plurality of exemplary aspects, as illustrated in the various figures and discussed above, it is understood that other similar aspects can be used, or modifications and additions can be made to the described subject matter for performing the same function of the present disclosure without deviating therefrom. In this disclosure, methods and compositions were described according to aspects of the presently disclosed subject matter. But other equivalent methods or compositions to these described aspects are also contemplated by the teachings herein. Therefore, the present disclosure should not be limited to any single aspect, but rather construed in breadth and scope in accordance with the appended claims.

## Claims

1. A freeze protection system (108) comprising:
a first valve (110) configured to be coupled with an inlet of a water heater (102);
a second valve (112) configured to be coupled with an outlet of the water heater (102); and **characterized in** further comprising
a valve actuator (120) configured to automatically actuate the first valve (110) and the second valve (112) to permit water to drain from the water heater (102) when, 1, electric power is lost to the water heater (102), and, 2, a temperature of a fluid in or around the water heater (102) is less than or equal to a predetermined low temperature threshold.

2. The freeze protection system of claim 1, wherein the valve actuator (120) comprises a solenoid switch (606) configured to transition between an open state and a closed state.

3. The freeze protection system of claim 2, wherein the valve actuator (120) further comprises a temperature switch (604) configured to close when the temperature of the fluid is less than or equal to the low temperature threshold.

4. The freeze protection system of claim 3, wherein the temperature switch (604) comprises a bimetal component configured to cause the temperature switch (604) to close when the temperature of the fluid is less than or equal to the low temperature threshold.

5. The freeze protection system of claim 3, wherein the temperature switch (604) comprises a pneumatic actuator having a gas that is configured to contract when the temperature of the fluid is less than or equal to the low temperature threshold, thereby causing the temperature switch (604) to close, or
wherein the temperature switch (604) comprises a hydraulic actuator having a liquid that is configured to expand when the temperature of the fluid is less than or equal to the low temperature threshold, thereby causing the temperature switch (604) to close.

6. The freeze protection system of claim 3, further comprising an energy storage device (602), wherein, when a power switch is closed and the temperature switch (604) is closed, the energy storage device (602) is configured to discharge and cause the first valve (110) and the second valve (112) to actuate, thereby permitting the water to drain from the water heater (102).

7. The freeze protection system of claim 1, wherein the valve actuator (120) comprises a solenoid valve (744) configured to transition from an open state to a closed state when the electric power is lost to the water heater (102), such that when the solenoid valve (744) is in the open state, the solenoid valve (744) permits water to flow into the water heater (102), and when the solenoid valve (744) is in the closed state, the solenoid valve (102) prevents water from flowing into the water heater (102).

8. The freeze protection system of claim 7, wherein the valve actuator (120) further comprises a temperature actuator configured to permit the solenoid valve (744) to transition to the closed state when the temperature of the fluid is less than or equal to the low temperature threshold, and prevent the solenoid valve (744) from transitioning to the closed state when the temperature of the fluid is greater than or equal to the low temperature threshold,
optionally wherein the temperature actuator comprises an elongated portion (848) configured to extend into a pathway of the solenoid valve (744) when the temperature of the fluid is greater than the low temperature threshold, thereby preventing the solenoid valve (744) from transitioning to the closed state, and retract out of the pathway of the solenoid valve (744) when the temperature of the fluid is less than or equal to the low temperature threshold, thereby permitting the solenoid valve (744) to transition to the closed state.

9. The freeze protection system of claim 8, wherein the temperature actuator comprises:
a pneumatic actuator (740) having a gas that is configured to contract when the temperature of the fluid is less than or equal to the low temperature threshold, thereby causing the temperature actuator to retract out of the pathway of the solenoid valve (744), or
a hydraulic actuator (750) having a liquid that is configured to expand when the temperature of the fluid is less than or equal to the low temperature threshold, thereby causing the temperature actuator to retract out of the pathway of the solenoid valve (744).

10. The freeze protection system of claim 1, further comprising an on-delay timer (428) configured to delay re-supply of electric power to the water heater (402) for a period after restoration of electric power.

11. A water heater comprising:
a tank having a water inlet and a water outlet; and
the freeze protection system (108) of any one of claims 1 to 10, wherein the first valve (110) is connected to and in fluid communication with the water inlet, and the second valve (112) is connected to and in fluid communication with the water outlet.

12. The water heater of claim 11, comprising a valve assembly (1000) which comprises:
a first fluid pathway (1062) configured to permit water to flow from a water source and through the water heater (102);
a second fluid pathway (1064) configured to permit the water to drain from the water heater (102); and
a plug (1060) configured to transition between a first position and a second position, the plug (1060) being configured to open the first fluid pathway (1062) and close the second fluid pathway (1064) when in the first position, and close the first fluid pathway (1062) and open the second fluid pathway (1064) when in the second position,
wherein the valve actuator (120) is configured to automatically actuate the plug (1060) from the first position and to the second position when, 1, electric power is lost to the water heater (102), and, 2, the temperature of the fluid in or around the water heater (102) is less than or equal to the predetermined low temperature threshold.

13. The water heater of claim 12, wherein the valve actuator (120) comprises:
a solenoid valve (744) configured to transition from a first state to a second state when power is lost to the water heater, such that when the solenoid valve (744) is in the first state, the solenoid valve (744) is configured to cause the plug (1060) to be in the first position, and when the solenoid valve (744) is in the second state, the solenoid valve (744) is configured cause the plug (1060) to be in the second position; and
a temperature actuator configured to permit the solenoid valve (744) to transition to the second state when the temperature of the fluid is less than or equal to the low temperature threshold, and prevent the solenoid valve (744) from transitioning to the second state when the temperature of the fluid is greater than or equal to the low temperature threshold.

14. A method of controlling a freeze protection system, the method comprising:
actuating a first valve (110) and a second valve (112), wherein the first valve (110) is in fluid communication with an inlet of a water heater (102) and the second valve (112) is in fluid communication with an outlet of the water heater (102), to permit water to drain from the water heater (102) upon both, 1, loss of electric power to the water heater (102), and, 2, a temperature of a fluid in or around the water heater (102) being less than or equal to a predetermined low temperature threshold.

15. The method of claim 14, wherein the first valve (110) and the second valve (112) are configured to transition:
from an open state to a closed state when, 1, the electric power is lost to the water heater and, 2, the temperature of the fluid is less than or equal to the predetermined low temperature threshold, such that in the closed state water is prevented from flowing into the water heater (102); and
from a closed state to an open state when, 1, the electric power is restored to the water heater (102), or, 2, the temperature of the fluid is greater than the predetermined low temperature threshold, such that in the open state water is permitting to flow into the water heater (102).

## Patentansprüche

1. Gefrierschutzsystem (108), das Folgendes umfasst:
ein erstes Ventil (110), das zum Koppeln mit einem Zulauf eines Wassererhitzers (102) konfiguriert ist;
ein zweites Ventil (112), das zum Koppeln mit einem Auslass des Wassererhitzers (102) konfiguriert ist; und **dadurch gekennzeichnet, dass** es ferner Folgendes beinhaltet:
ein Ventilstellglied (120), das zum automatischen Betätigen des ersten Ventils (110) und des zweiten Ventils (112) zum Ablassen von Wasser aus dem Wassererhitzer (102), wenn 1 die Stromzufuhr zum Wassererhitzer (102) ausfällt und 2 eine Temperatur eines Fluids im oder um den Wassererhitzer (102) gleich einer vorbestimmten unteren Temperaturschwelle ist oder darunter liegt ist, konfiguriert ist.

2. Gefrierschutzsystem nach Anspruch 1, wobei das Ventilstellglied (120) einen Magnetschalter (606) umfasst, der zum Wechseln zwischen einem offenen Zustand und einem geschlossenen Zustand konfiguriert ist.

3. Gefrierschutzsystem nach Anspruch 2, wobei das Ventilstellglied (120) ferner einen Temperaturschalter (604) umfasst, der zum Schließen, wenn die Temperatur des Fluids gleich der unteren Temperaturschwelle ist oder darunter liegt, konfiguriert ist.

4. Gefrierschutzsystem nach Anspruch 3, wobei der Temperaturschalter (604) eine Bimetallkomponente umfasst, die zum Veranlassen des Schließens des Temperaturschalters (604), wenn die Temperatur des Fluids gleich der unteren Temperaturschwelle ist oder darunter liegt, konfiguriert ist.

5. Gefrierschutzsystem nach Anspruch 3, wobei der Temperaturschalter (604) ein pneumatisches Stellglied umfasst, das ein Gas aufweist, das dafür ausgelegt ist, sich zusammenzuziehen, wenn die Temperatur des Fluids gleich der unteren Temperaturschwelle ist oder darunter liegt, wodurch das Schließen des Temperaturschalters (604) veranlasst wird, oder
wobei der Temperaturschalter (604) ein hydraulisches Stellglied umfasst, das eine Flüssigkeit aufweist, die dafür ausgelegt ist, sich auszudehnen, wenn die Temperatur des Fluids gleich der unteren Temperaturschwelle ist oder darunter liegt, wodurch das Schließen des Temperaturschalters (604) veranlasst wird.

6. Gefrierschutzsystem nach Anspruch 3, das ferner eine Energiespeichervorrichtung (602) umfasst, wobei die Energiespeichervorrichtung (602), wenn ein Stromschalter geschlossen ist und der Temperaturschalter (604) geschlossen ist, zum Entladen und zum Veranlassen des Betätigens des ersten Ventils (110) und des zweiten Ventils (112) konfiguriert ist, so dass das Wasser aus dem Wassererhitzer (102) abfließen kann.

7. Gefrierschutzsystem nach Anspruch 1, wobei das Ventilstellglied (120) ein Magnetventil (744) umfasst, das zum Wechseln von einem offenen Zustand in einen geschlossenen Zustand, wenn die Stromzufuhr zum Wassererhitzer (102) ausfällt, konfiguriert ist, so dass, wenn das Magnetventil (744) in dem offenen Zustand ist, das Magnetventil (744) Wasser in den Wassererhitzer (102) fließen lässt und, wenn das Magnetventil (744) in dem geschlossenen Zustand ist, das Magnetventil (102) verhindert, dass Wasser in den Wassererhitzer (102) fließt.

8. Gefrierschutzsystem nach Anspruch 7, wobei das Ventilstellglied (120) ferner ein Temperaturstellglied umfasst, das zum Ermöglichen, dass das Magnetventil (744) in den geschlossenen Zustand wechselt, wenn die Temperatur des Fluids gleich der unteren Temperaturschwelle ist oder darunter liegt, und zum Verhindern, dass das Magnetventil (744) in den geschlossenen Zustand wechselt, wenn die Temperatur des Fluids gleich der unteren Temperaturschwelle ist oder darüber liegt, konfiguriert ist,
wahlweise wobei das Temperaturstellglied einen länglichen Teil (848) umfasst, der so konfiguriert ist, dass er sich in einen Kanal des Magnetventils (744) erstreckt, wenn die Temperatur des Fluids unter der unteren Temperaturschwelle liegt, wodurch verhindert wird, dass das Magnetventil (744) in den geschlossenen Zustand wechselt, und aus dem Kanal des Magnetventils (744) zurückgezogen wird, wenn die Temperatur des Fluids gleich der unteren Temperaturschwelle ist oder darunter liegt, so dass das Magnetventil (744) in den geschlossenen Zustand wechseln kann.

9. Gefrierschutzsystem nach Anspruch 8, wobei das Temperaturstellglied Folgendes umfasst:
ein pneumatisches Stellglied (740), das ein Gas aufweist, das dafür ausgelegt ist, sich zusammenzuziehen, wenn die Temperatur des Fluids gleich der unteren Temperaturschwelle ist oder darunter liegt, wodurch veranlasst wird, dass das Temperaturstellglied aus dem Kanal des Magnetventils (744) zurückgezogen wird, oder
ein hydraulisches Stellglied (750), das eine Flüssigkeit aufweist, die dafür ausgelegt ist, sich auszudehnen, wenn die Temperatur des Fluids gleich der unteren Temperaturschwelle ist oder darunter liegt, wodurch veranlasst wird, dass das Temperaturstellglied aus dem Kanal des Magnetventils (744) zurückgezogen wird.

10. Gefrierschutzsystem nach Anspruch 1, das ferner einen Einschaltverzögerungs-Timer (428) umfasst, der zum Verzögern der erneuten Stromzufuhr zum Wassererhitzer (402) für einen Zeitraum nach der Wiederherstellung der Stromversorgung konfiguriert ist.

11. Wassererhitzer, der Folgendes umfasst:
einen Tank mit einem Wasserzulauf und einem Wasserablauf; und
ein Gefrierschutzsystem (108) nach einem der Ansprüche 1 bis 10, wobei das erste Ventil (110) mit dem Wasserzulauf verbunden ist und in Fluidverbindung steht und das zweite Ventil (112) mit dem Wasserablauf verbunden ist und in Fluidverbindung steht.

12. Wassererhitzer nach Anspruch 11, der eine Ventilanordnung (1000) umfasst, die Folgendes umfasst:
einen ersten Fluidkanal (1062), der zum Fließenlassen von Wasser aus einer Wasserquelle und durch den Wassererhitzer (102) konfiguriert ist;
einen zweiten Fluidkanal (1064), die zum Abfließenlassen des Wassers aus dem Wassererhitzer (102) konfiguriert ist; und
einen Stopfen (1060), der zum Wechseln zwischen einer ersten Stellung und einer zweiten Stellung konfiguriert ist, wobei der Stopfen (1060) zum Öffnen des erste Fluidkanals (1062) und zum Schließen des zweiten Fluidkanals (1064), wenn in der ersten Stellung, und zum Schließen des erste Fluidkanals (1062) und zum Öffnen des zweiten Fluidkanals (1064), wenn in der zweiten Stellung, konfiguriert ist,
wobei das Ventilstellglied (120) zum automatischen Betätigen des Stopfens (1060) von der ersten Stellung und in die zweite Stellung, wenn 1 die Stromversorgung des Wassererhitzers ausfällt und 2 die Temperatur des Fluids im oder um den Wassererhitzer (102) gleich einer vorbestimmten unteren Temperaturschwelle ist oder darunter liegt, konfiguriert ist.

13. Wassererhitzer nach Anspruch 12, wobei das Ventilstellglied (120) Folgendes umfasst: ein Magnetventil (744), das konfiguriert ist zum Wechseln von einem offenen Zustand in einen geschlossenen Zustand, wenn die Stromversorgung des Wassererhitzers ausfällt, so dass, wenn das Magnetventil (744) in dem ersten Zustand ist, das Magnetventil (744) zum Veranlassen, dass der Stopfens (1060) in der ersten Stellung ist, konfiguriert ist, und, wenn das Magnetventil (744) in dem zweiten Zustand ist, das Magnetventil (744) zum Veranlassen, dass der Stopfen (1060) in der zweiten Stellung ist, konfiguriert ist; und
ein Temperaturstellglied, das zum Ermöglichen, dass das Magnetventil (744) in den zweiten Zustand wechselt, wenn die Temperatur des Fluids gleich der unteren Temperaturschwelle ist oder darunter liegt, und zum Verhindern, dass das Magnetventil (744) in den zweiten Zustand wechselt, wenn die Temperatur des Fluids gleich der unteren Temperaturschwelle ist oder darüber liegt, konfiguriert ist,

14. Verfahren zum Steuern eines Gefrierschutzsystems, wobei das Verfahren Folgendes umfasst:
Betätigen eines ersten Ventils (110) und eines zweiten Ventils (112), wobei das erste Ventil (110) mit einem Zulauf eines Wassererhitzers (102) in Fluidverbindung steht und das zweite Ventil (112) mit einem Auslass des Wassererhitzers (102) in Fluidverbindung steht, zum Abfließenlassen von Wasser aus dem Wassererhitzer (102) sowohl 1 bei Ausfall der Stromversorgung des Wassererhitzers (102), als auch, wenn 2 eine Temperatur eines Fluids im oder um den Wassererhitzer (102) gleich einer vorbestimmten unteren Temperaturschwelle ist oder darunter liegt.

15. Verfahren nach Anspruch 14, wobei das erste Ventil (110) und das zweite Ventil (112) konfiguriert sind zum Wechseln:
von einem offenen Zustand in einen geschlossenen Zustand, wenn 1 die Stromversorgung des Wassererhitzers ausfällt und 2 die Temperatur des Fluids gleich der vorbestimmten unteren Temperaturschwelle ist oder darunter liegt, so dass in dem geschlossenen Zustand verhindert wird, dass Wasser in den Wassererhitzer (102) fließt; und
von einem geschlossenen Zustand in einen offenen Zustand, wenn 1 die Stromversorgung des Wassererhitzers (102) wiederhergestellt wird oder 2 die Temperatur des Fluids über der vorbestimmten unteren Temperaturschwelle liegt, so dass im offenen Zustand Wasser in den Wassererhitzer (102) fließen kann.

## Revendications

1. Système de protection contre le gel (108) comprenant :
une première vanne (110) configurée pour être couplée à une entrée d'un chauffe-eau (102) ;
une seconde vanne (112) configurée pour être couplée à une sortie du chauffe-eau (102) ; et **caractérisé en ce qu'**il comprend en outre
un actionneur de vannes (120) configuré pour actionner automatiquement la première vanne (110) et la seconde vanne (112) afin de permettre à l'eau de s'écouler du chauffe-eau (102) lorsque, 1, une puissance électrique allant au chauffe-eau (102) est perdue, et, 2, une température d'un fluide dans ou autour du chauffe-eau (102) est inférieure ou égale à un seuil de basse température prédéterminé.

2. Système de protection contre le gel selon la revendication 1, dans lequel l'actionneur de vannes (120) comprend un commutateur à solénoïde (606) configuré pour passer d'un état ouvert à un état fermé.

3. Système de protection contre le gel selon la revendication 2, dans lequel l'actionneur de vannes (120) comprend en outre un commutateur de température (604) configuré pour se fermer lorsque la température du fluide est inférieure ou égale au seuil de basse température.

4. Système de protection contre le gel selon la revendication 3, dans lequel le commutateur de température (604) comprend un composant bimétallique configuré pour amener le commutateur de température (604) à se fermer lorsque la température du fluide est inférieure ou égale au seuil de basse température.

5. Système de protection contre le gel selon la revendication 3, dans lequel le commutateur de température (604) comprend un actionneur pneumatique doté d'un gaz configuré pour se contracter lorsque la température du fluide est inférieure ou égale au seuil de basse température, amenant ainsi le commutateur de température (604) à se fermer, ou
dans lequel le commutateur de température (604) comprend un actionneur hydraulique doté d'un liquide configuré pour se dilater lorsque la température du fluide est inférieure ou égale au seuil de basse température, amenant ainsi le commutateur de température (604) à se fermer.

6. Système de protection contre le gel selon la revendication 3, comprenant également un dispositif de stockage d'énergie (602), dans lequel, lorsqu'un commutateur d'alimentation est fermé et le commutateur de température (604) est fermé, le dispositif de stockage d'énergie (602) est configuré pour se décharger et entraîner l'activation de la première vanne (110) et de la seconde vanne (112), permettant ainsi à l'eau de s'écouler du chauffe-eau (102).

7. Système de protection contre le gel selon la revendication 1, dans lequel l'actionneur de vannes (120) comprend une électrovanne (744) configurée pour passer d'un état ouvert à un état fermé lorsque la puissance électrique allant au chauffe-eau (102) est perdue, de telle sorte que lorsque l'électrovanne (744) est dans l'état ouvert, l'électrovanne (744) permette à l'eau de s'écouler dans le chauffe-eau (102), et lorsque l'électrovanne (744) est dans l'état fermé, l'électrovanne (102) empêche l'eau de s'écouler dans le chauffe-eau (102).

8. Système de protection contre le gel selon la revendication 7, dans lequel l'actionneur de vannes (120) comprend en outre un actionneur de température configuré pour permettre à l'électrovanne (744) de passer à l'état fermé lorsque la température du fluide est inférieure ou égale au seuil de basse température, et empêcher l'électrovanne (744) de passer à l'état fermé lorsque la température du fluide est supérieure ou égale au seuil de basse température,
éventuellement, dans lequel l'actionneur de température comprend une partie allongée (848) configurée pour s'étendre dans un passage de l'électrovanne (744) lorsque la température du fluide dépasse le seuil de basse température, empêchant ainsi l'électrovanne (744) de passer à l'état fermé, et pour se rétracter hors du passage de l'électrovanne (744) lorsque la température du fluide est inférieure ou égale au seuil de basse température, permettant ainsi à l'électrovanne (744) de passer à l'état fermé.

9. Système de protection contre le gel selon la revendication 8, dans lequel l'actionneur de température comprend :
un actionneur pneumatique (740) doté d'un gaz configuré pour se contracter lorsque la température du fluide est inférieure ou égale au seuil de basse température, amenant ainsi l'actionneur de température à se rétracter hors du passage de l'électrovanne (744), ou
un actionneur hydraulique (750) doté d'un liquide configuré pour se dilater lorsque la température du fluide est inférieure ou égale au seuil de basse température, amenant ainsi l'actionneur de température à se rétracter hors du passage de l'électrovanne (744).

10. Système de protection contre le gel selon la revendication 1, comprenant en outre un minuteur de retard (428) configuré pour retarder la ré-alimentation en puissance électrique du chauffe-eau (402) pendant une période après le rétablissement de la puissance électrique.

11. Chauffe-eau comprenant :
un réservoir doté d'une entrée d'eau et d'une sortie d'eau ; et
le système de protection contre le gel (108) selon l'une quelconque des revendications 1 à 10, dans lequel la première vanne (110) est connectée et en communication fluidique avec l'entrée d'eau, et la seconde vanne (112) est connectée à et en communication fluidique avec la sortie d'eau.

12. Chauffe-eau de la revendication 111, comprenant un ensemble de vanne (1000) qui comprend :
un premier passage de fluide (1062) configuré pour permettre à l'eau de s'écouler depuis une source d'eau et à travers le chauffe-eau (102) ;
un second passage de fluide (1064) configuré pour permettre à l'eau de s'écouler du chauffe-eau (102) ; et
un bouchon (1060) configuré pour passer d'une première position à une seconde position, le bouchon (1060) étant configuré pour ouvrir le premier passage de fluide (1062) et fermer le second passage de fluide (1064) lorsqu'il est dans la première position, et pour fermer le premier passage de fluide (1062) et ouvrir le second passage de fluide (1064) lorsqu'il est dans la seconde position,
dans lequel l'actionneur de vannes (120) est configuré pour actionner automatiquement le bouchon (1060) depuis la première position et vers la deuxième position lorsque, 1, une puissance électrique allant au chauffe-eau (102) est perdue, et, 2, la température du fluide dans ou autour du chauffe-eau (102) est inférieure ou égale au seuil de basse température prédéterminé.

13. Chauffe-eau selon la revendication 12, dans lequel l'actionneur de vannes (120) comprend :
une électrovanne (744) configurée pour passer d'un premier état à un second état lorsqu'une puissance allant au chauffe-eau est perdue, de telle sorte que lorsque l'électrovanne (744) est dans le premier état, l'électrovanne (744) soit configurée pour que le bouchon (1060) soit dans la première position, et lorsque l'électrovanne (744) est dans le second état, l'électrovanne (744) soit configurée pour que le bouchon (1060) soit dans la seconde position ; et
un actionneur de température configuré pour permettre à l'électrovanne (744) de passer au second état lorsque la température du fluide est inférieure ou égale au seuil de basse température, et empêcher l'électrovanne (744) de passer au second état lorsque la température du fluide est supérieure ou égale au seuil de basse température.

14. Procédé de commande d'un système de protection contre le gel, le procédé comprenant :
l'actionnement d'une première vanne (110) et d'une seconde vanne (112), dans lequel la première vanne (110) est en communication fluidique avec une entrée d'un chauffe-eau (102) et la seconde vanne (112) est en communication fluidique avec une sortie du chauffe-eau (102), permettant à l'eau de s'écouler du chauffe-eau (102) lorsque à la fois, 1, une puissance électrique allant au chauffe-eau (102) est perdue, et 2, une température d'un fluide dans ou autour du chauffe-eau (102) est inférieure ou égale à un seuil de basse température prédéterminé.

15. Procédé selon la revendication 14, dans lequel la première vanne (110) et la seconde vanne (112) sont configurées pour passer :
d'un état ouvert à un état fermé lorsque, 1, la puissance électrique allant au chauffe-eau est perdue et, 2, la température du fluide est inférieure ou égale au seuil de basse température prédéterminé, de telle sorte que dans l'état fermé, l'eau soit empêchée de s'écouler dans le chauffe-eau (102) ; et
d'un état fermé à un état ouvert lorsque, 1, la puissance électrique allant au chauffe-eau (102) est rétablie, ou, 2, la température du fluide est supérieure au seuil de basse température prédéfini, de telle sorte que dans l'état ouvert, l'eau puisse s'écouler dans le chauffe-eau (102).
